# EUROPEAN PATENT APPLICATION

(11) **EP 1 643 744 A1**
(43) Date of publication of application: **05.04.2006**
(21) Application number: 04292350.8
(22) Date of filing: 04.10.2004
(51) Int. Cl.: H04M 3/53, H04M 3/537, H04M 3/42, H04L 29/06

(54) **Method for transfering video data to several users in an MMS-network**

(71) Applicant: ALCATEL, 75008 Paris (FR)
(72) Inventor: Ferres, Lamia, 91300 Massy (FR); Legat, Bruno, 91090 Lisses (FR)
(74) Representative: Rausch, Gabriele

(57) **Abstract**

The present invention concerns a method for providing multimedia message services, in particular for sending a MMS message comprising video data to several recipients, characterised in that said method comprises the steps of:
- sending a MMS from a user to a MMS compatible relay (3);
- transmitting said complete MMS message or said video data to a video server (4);
- notifying the availability of said video data to said concerned recipients by indicating an URL at which said video data is stored and can be accessed.

## Description

The present invention concerns the field of telecommunications, more particularly the exchange of large amounts of data between users, and proposes a method and a system for dispatching a MMS message with video data to several recipients.

Following the success of SMS messages, Multimedia Message Services (MMS) are becoming more and more successful, in particular on the mobile environment.

This phenomenon is mainly sustained by two major technological evolutions, namely, on the one hand, the spreading of multifunctional and more powerful mobile terminals and, on the other hand, the increase of transport capacity on the networks, in particular due to the general use of GPRS and now the emergence of the 3G standard.

However sending video in a MMS message to several users is not at all optimised and not very useful.

Indeed, at present, when a user sends a MMS message with video to several recipients, said MMS message is transmitted to the nearest MMS compatible relay which forwards said message, as it is, to all of the aimed recipients.

Such a transmission mode of video data requires a large bandwidth and is expensive, as the video data is sent n times to n recipients.

Furthermore, such a transmission mode does not take into consideration whether or not the targeted terminals (usually mobile phones) are able to receive and handle MMS messages with video or not (limited storage capacity for example), nor does it take into account whether the recipient wishes to view the video on said targeted terminal or on another one.

Finally, the present transmission mode does not give to the recipients the choice to decide whether they are interested in the video data or not.

The present invention proposes to overcome the aforementioned restrictions and drawbacks.

To that end, the present invention provides a method for providing multimedia message services, in particular for sending a MMS message comprising video data to several recipients, characterised in that said method comprises the steps of:
- sending a MMS from a user to a MMS compatible relay;
- transmitting said complete MMS message or said video data to a video server;
- notifying the availability of said video data to said concerned recipients by indicating an URL at which said video data is stored and can be accessed.

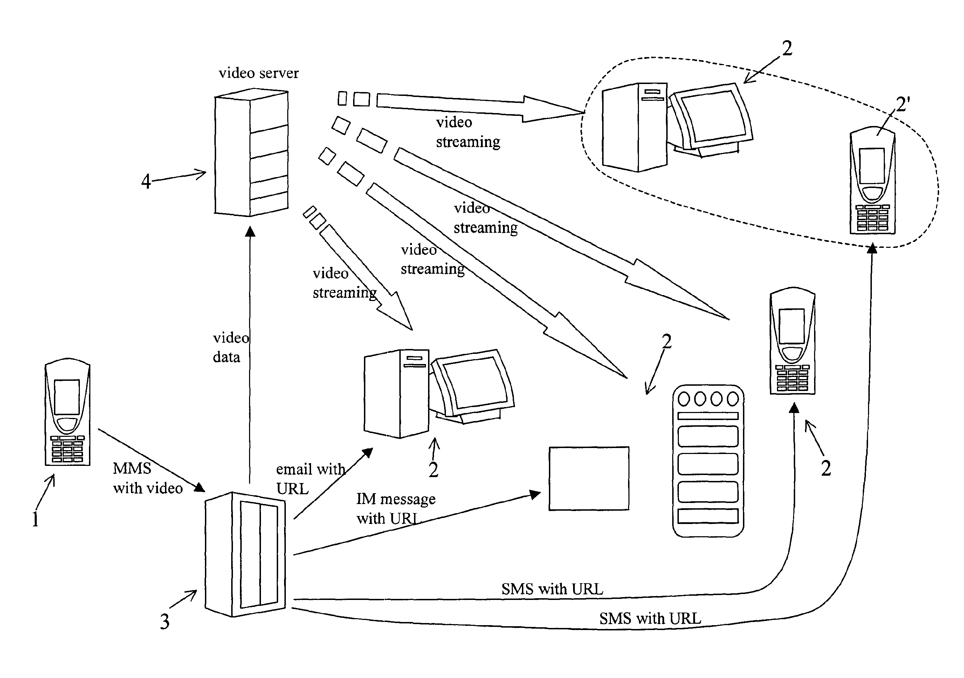

The present invention will be better understood thanks to the following description of additional features and advantages, and will now be described in more details, by way of example, in relation to a non limitative embodiment shown on the enclosed drawing, wherein the sole figure illustrates schematically the working of the proposed method and system.

The method for dispatching a MMS message to several recipients mainly comprises the steps of:
- sending a MMS from a user to a MMS compatible relay 3;
- transmitting said complete MMS message or said video data to a video server 4;
- notifying the availability of said video data to said concerned recipients by indicating an URL at which said video data is stored and can be accessed.

More precisely, said method can comprise the steps of:
Method according to claim 1, characterised in that it comprises more precisely the steps of:
   - sending an MMS message with video data from a user terminal 1 to a MMS proxy relay 3;
   - transmitting said video data from said MMS proxy relay 3 to a video server 4, where it is stored at a particular URL;
   - sending notification messages from the MMS relay 3 to the concerned recipients, informing them about the MMS message and indicating the availability of the video data and the particular URL where said data is stored;
   - streaming the video data from said video server 4 to the MMS enable terminal(s) 2 of the or one of the recipient(s) which have or has entered and/or validated said particular URL.

Thus, the operator of the network, instead of automatically sending the MMS message with video data to each of the recipients, and therefore forcing said data onto them, will stream the video data towards the recipients who have specifically requested said data.

Generally, the user terminal 1 sending the MMS message is a mobile cellular phone incorporating video data acquiring, handling and storing means.

At the other end, for at least one recipient, the terminal 2 receiving the notification message can be the same as the terminal requesting and receiving the streamed video data from the video server 4.

Alternatively, for at least one recipient, the terminal 2' receiving the notification message can be different from the terminal 2 requesting and receiving the streamed video data from the video server 4.

In this latter case, the terminal 2' receiving the notification message can possibly be unable to receive and/or handle MMS messages and/or video data.

Preferably, each notification message incorporating the URL of the video data to be retrieved is selected from the group consisting of e-mails, IM messages and SMS messages, depending on the type of the terminal 2 or 2' of the concerned recipient.

To that end, the proxy relay 3 can for example analyse the type of address of each of the concerned recipients as indicated in the MMS message.

The present invention also concerns a Multimedia Messaging Services supporting telecommunication system, able to handle MMS messages comprising video data and enabling a user of a MMS supporting terminal to send such a MMS message with video to several recipients.

According to the invention, said system is characterised in that it is comprised of at least one MMS proxy relay 3 associated with at least one video server 4, said proxy relay 3 comprising means to receive MMS messages with video data from a user terminal 1, to upload said video data to the or a video server 4 and to send notification messages to the concerned recipients with the URL of said video data, and said video server 4 comprising means to store said video data at a given URL and to send it to a or the recipient(s), upon request.

Advantageously, said system comprises means and is able to perform the method described herein before.

Thus, as mentioned previously, the MMS proxy relay 3, instead of simply relaying a MMS message with video received from a user, uploads said video to a video server 4 and sends a notification to each of the recipients with the URL of the video. The notifications can be of several types depending on the users' terminals: it can be a SMS for mobile phone, an email for PCs or an IM message if the receiving user is connected on Instant Messaging Service. Then the recipients of the notifications, if they want, can click independently on the URL and the video is then streamed to them.

Thanks to the method and system of the invention, the operator will save bandwidth and costs. The user will be able to benefit from said cost reductions and does not have to change his habits (he sends his MMS message as usual).

The present invention is, of course, not limited to the preferred embodiment described and represented herein, changes can be made or equivalents used without departing from the scope of the invention.

## Claims

1. Method for providing multimedia message services, in particular for sending a MMS message comprising video data to several recipients, **characterised in that** said method comprises the steps of:
- sending a MMS from a user to a MMS compatible relay (3);
- transmitting said complete MMS message or said video data to a video server (4);
- notifying the availability of said video data to said concerned recipients by indicating an URL at which said video data is stored and can be accessed.

2. Method according to claim 1, **characterised in that** it comprises more precisely the steps of:
- sending an MMS message with video data from a user terminal (1) to a MMS proxy relay (3);
- transmitting said video data from said MMS proxy relay (3) to a video server (4), where it is stored at a particular URL;
- sending notification messages from the MMS relay (3) to the concerned recipients, informing them about the MMS message and indicating the availability of the video data and the particular URL where said data is stored;
- streaming the video data from said video server (4) to the MMS enable terminal(s) (2) of the or one of the recipient(s) which have or has entered and/or validated said particular URL.

3. Method according to claim 1 or 2, **characterised in that** the user terminal (1) sending the MMS message is a mobile cellular phone incorporating video data acquiring, handling and storing means.

4. Method according to anyone of claims 2 and 3, **characterised in that**, for at least one recipient, the terminal (2) receiving the notification message is the same as the terminal requesting and receiving the streamed video data from the video server (4).

5. Method according to anyone of claims 2 and 3, **characterised in that**, for at least one recipient, the terminal (2') receiving the notification message is different from the terminal (2) requesting and receiving the streamed video data from the video server (4).

6. Method according to claim 5, **characterised in that** the terminal (2') receiving the notification message is unable to receive and/or handle MMS messages and/or video data.

7. Method according to anyone of claim s 1 to 6, **characterised in that** each notification message incorporating the URL of the video data to be retrieved is selected from the group consisting of e-mails, IM messages and SMS messages, depending on the type of the terminal (2 or 2') of the concerned recipient.

8. Multimedia Messaging Services supporting telecommunication system, able to handle MMS messages comprising video data and enabling a user of a MMS supporting terminal to send such a MMS message with video to several recipients, **characterised in that** it is comprised of at least one MMS proxy relay (3) associated with at least one video server (4), said proxy relay (3) comprising means to receive MMS messages with video data from a user terminal (1), to upload said video data to the or a video server (4) and to send notification messages to the concerned recipients with the URL of said video data, and said video server (4) comprising means to store said video data at a given URL and to send it to a or the recipient(s), upon request.

9. MMS supporting telecommunication system according to claim 8, **characterised in that** it is able to perform the method according to anyone of claims 1 to 7.
